# EUROPEAN PATENT APPLICATION

(11) **EP 4 302 623 A1**
(43) Date of publication of application: **10.01.2024**
(21) Application number: 22762632.2
(22) Date of filing: 04.03.2022
(51) Int. Cl.: A24F 40/465, A24F 40/46, A24F 40/57, A24F 40/50, A24F 40/40, H02M 3/156

(54) **AEROSOL GENERATING APPARATUS**

(30) Priority: 04.03.2021 CN 202110242013
(71) Applicant: Shenzhen First Union Technology Co., Ltd., Shenzhen, Guangdong 518000 (CN)
(72) Inventor: LI, Xinjun, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2022/079348
(87) International publication number: WO 2022/184171

(57) **Abstract**

This application provides a vapor generation device, including: a core, configured to supply power; a susceptor, configured to generate heat upon penetration by a changing magnetic field, to heat the aerosol generation product; an LC oscillator, including an inductance coil and a first capacitor; a first switch tube, positioned between the core and the LC oscillator, where the first switch tube is configured to be intermittently turned on to drive the LC oscillator to oscillate; a temperature sensor, configured to sense a temperature of the susceptor; a sampling module, configured to sample a sensing result of the temperature sensor; and a DC-DC booster, having an input terminal connected to the core and an output terminal connected to the sampling module, where the DC-DC booster is configured to boost an output voltage of the core and output the boosted voltage to the sampling module to supply power to the sampling module when the first switch tube is turned on. Through the vapor generation device, power is supplied to the sampling module by the DC-DC booster when the core supplies power to the LC oscillator, so that the sampling module can accurately obtain a temperature result sensed by the temperature sensor in real time during oscillation of the LC oscillator.

## Description

### CROSS-REFERENCE TO RELATED APPLICATIONS

This application claims priority to Chinese Patent Application 202110242013.X, filed with the China National Intellectual Property Administration on March 04, 2021 and entitled "VAPOR GENERATION DEVICE", which is incorporated herein by reference in its entirety.

### TECHNICAL FIELD

Embodiments of this application relate to the technical field of heat-not-burn cigarette devices, and in particular, to a vapor generation device.

### BACKGROUND

Tobacco products (such as cigarettes, cigars, and the like) burn tobacco during use to produce tobacco smoke. Attempts are made to replace these tobacco-burning products by manufacturing products that release compounds without burning tobacco.

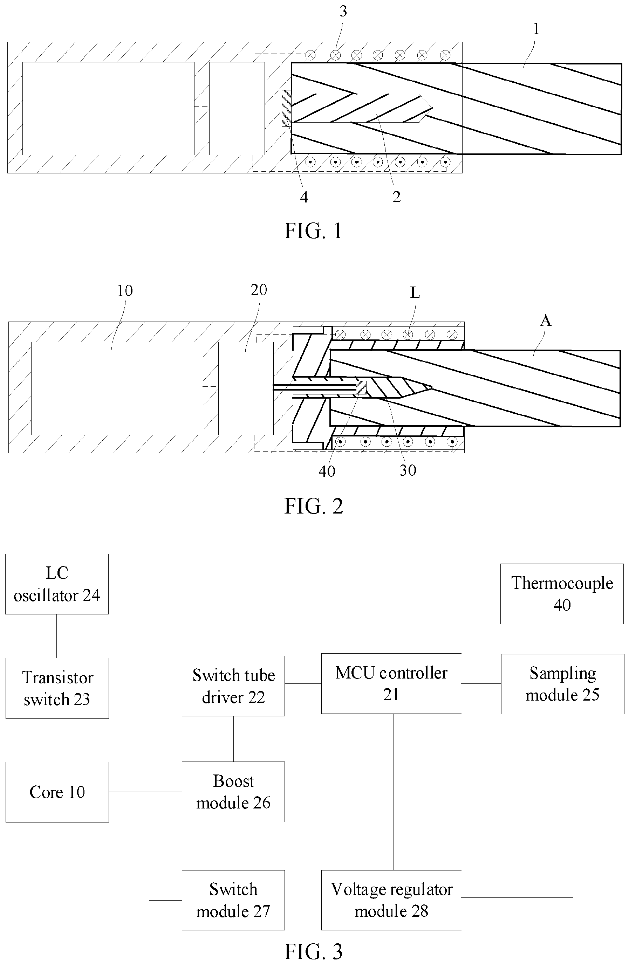

An example of this type of products is a heating device that releases compounds by heating rather than burning materials. For example, the materials may be tobacco or another non-tobacco product, where the non-tobacco products may or may not include nicotine. As another example, the related art provides a heating device of an electromagnetic induction heating type. A structure of the heating device is shown in FIG. 1. When a tobacco product 1 is accommodated in the heating device, a susceptor 2 is penetrated by an alternating magnetic field generated by an induction coil 3 to inductively generate heat, thereby heating the tobacco product 1. During heating, for convenience of monitoring a heating temperature of the tobacco product 1 in real time, the heating device adopts a temperature sensor 4 that is closely attached to the susceptor 2 to sense a real-time operating temperature of the susceptor 2. The heating device adjusts parameters of the alternating magnetic field generated by the induction coil 3 based on a sensing result of the temperature sensor 4, so that the susceptor 2 is within an appropriate heating temperature range.

During implementation of the heating device, when the induction coil 3 generates an alternating magnetic field to induce the heating of the susceptor 2, the circuit is in a large load state with a high-power output, the output current of the power supply is large, and the output voltage drops relatively and jitter violently. In this process, when the result of sampling the temperature sensor 4 is sampled, a large ripple or signal noise exists due to a low power supply voltage, which affects accuracy of the sampling result.

Based on the above, patent No. 201880084762.0 as a prior art proposes avoiding or interrupting an alternating magnetic field in sampling a sensing result of a temperature sensor, so as to eliminate interference to the temperature sampling result. In the above implementation, the temperature sampling cannot be performed in real time, and can only be performed in a gap where the heating is interrupted or stopped, which affects a progress of the heating and easily leads to a large overshoot of the temperature.

### SUMMARY

An embodiment of this application provides a vapor generation device, configured to heat an aerosol generation product to generate an aerosol for inhalation, and including:
a core, configured to supply power;
a susceptor, configured to generate heat upon penetration by a changing magnetic field, to heat the aerosol generation product;
an LC oscillator, including an inductance coil and a first capacitor;
a first switch tube, positioned between the core and the LC oscillator, where the first switch tube is configured to be intermittently turned on to drive the LC oscillator to oscillate, thereby directing a changing current to flow through the inductance coil to generate a changing magnetic field in the inductance coil;
a temperature sensor, configured to sense a temperature of the susceptor;
a sampling module, configured to sample a sensing result of the temperature sensor; and
a DC-DC booster, having an input terminal connected to the core and an output terminal connected to the sampling module, where the DC-DC booster is configured to boost an output voltage of the core and output the boosted voltage to the sampling module to supply power to the sampling module when the first switch tube is turned on.

Through the vapor generation device, power is supplied to the sampling module by the DC-DC booster when the core supplies power to the LC oscillator, so that the sampling module can accurately obtain a temperature result sensed by the temperature sensor in real time during oscillation of the LC oscillator.

In a preferred implementation, the vapor generation device further includes:
a second switch tube, positioned between the core and the sampling module, where the second switch tube is configured to provide the output voltage of the core to the sampling module to supply power to the sampling module when the first switch tube is turned off.

In a preferred implementation, the vapor generation device further includes:
a voltage regulator module, including an input terminal and an output terminal, where the input terminal is connected to the DC-DC booster to form a first path, and is connected to the core through the second switch tube to form a second path, and the output terminal is connected to the sampling module; and
the voltage regulator module includes at least two voltage regulators connected in series configured to generate a constant voltage and supply power to the sampling module with the constant voltage.

In a preferred implementation, the sampling module includes at least an operational amplifier.

In a preferred implementation, the vapor generation device further includes:
a voltage follower, positioned between the voltage regulator module and the operational amplifier, where the voltage regulator module provides the constant voltage to the operational amplifier through the voltage follower.

In a preferred implementation, the vapor generation device further includes:
a second-order filter, configured to perform second-order filtering on an output result of the operational amplifier.

In a preferred implementation, the regulators in the voltage regulator module have a same power ripple rejection ratio.

In a preferred implementation, output voltages of the at least two voltage regulators connected in series in the voltage regulator module are reduced in sequence.

In a preferred implementation, the temperature sensor is a thermocouple, and the operational amplifier is configured to sample a thermoelectric potential of a hot end of the thermocouple relative to a cold end; and
the vapor generation device further includes:
a cold end sampling unit, configured to sample a potential of the cold end of the thermocouple.

Another embodiment of this application further provides a vapor generation device, configured to heat an aerosol generation product to generate an aerosol for inhalation, and including:
a core, configured to supply power;
a susceptor, configured to generate heat upon penetration by a changing magnetic field, to heat the aerosol generation product;
an LC oscillator, including an inductance coil and a first capacitor; the LC oscillator is configured to intermittently direct a changing current to flow through the inductance coil to drive the inductance coil to generate a changing magnetic field;
a temperature sensor, configured to sense a temperature of the susceptor;
a sampling module, configured to sample a sensing result of the temperature sensor; and
a voltage regulator module, including at least two voltage regulators connected in series, where the voltage regulator module is configured to generate a constant voltage, and supply power to the sampling module with the constant voltage.

The vapor generation device is powered by the operational amplifier including at least two series regulators to sample the result sensed by the temperature sensor, which greatly reduces the ripple interference in the sampling and operational output, so that the temperature result sensed by the temperature sensor can still be accurately obtained in real time during oscillation of the LC oscillator.

In a preferred implementation, the vapor generation device further includes:
a voltage follower, positioned between the voltage regulator module and the operational amplifier, where the voltage regulator module provides the constant voltage to the operational amplifier through the voltage follower.

In a preferred implementation, the vapor generation device further includes:
a DC-DC (direct current- direct current) booster, where an end is connected to the core, and another end is connected to the voltage regulator module, so as to boost the output voltage of the core and output the boosted voltage to the voltage regulator module.

In a preferred implementation, the vapor generation device further includes:
a third switch tube, positioned between the DC-DC booster and the voltage regulator module, where the third switch tube is configured to selectively provide the output voltage of the DC-DC booster to the voltage regulator module as the LC oscillator directs a changing current through the inductance coil.

In a preferred implementation, the vapor generation device further includes:
a second switch tube, positioned between the core and the voltage regulator module, where the second switch tube is configured to selectively provide the output voltage of the core booster to the voltage regulator module as the LC oscillator directs a changing current through the inductance coil.

In a preferred implementation, the vapor generation device further includes:
a second-order filter, configured to perform second-order filtering on an output result of the operational amplifier.

In a preferred implementation, output voltages of the at least two voltage regulators connected in series in the voltage regulator module are reduced in sequence.

In a preferred implementation, the regulators in the voltage regulator module have a same power ripple rejection ratio.

In a preferred implementation, the temperature sensor is a thermocouple, and the operational amplifier is configured to sample a thermoelectric potential of a hot end of the thermocouple relative to a cold end; and
the vapor generation device further includes:
a cold end sampling unit, configured to sample a potential of the cold end of the thermocouple.

In a preferred implementation, the vapor generation device further includes:
a controller, configured to control the LC oscillator to direct the changing current based on the output result of the operational amplifier, thereby keeping the temperature of the susceptor the same as a preset value.

### BRIEF DESCRIPTION OF THE DRAWINGS

One or more embodiments are exemplarily described with reference to the corresponding figures in the accompanying drawings, and the descriptions are not to be construed as limiting the embodiments. Elements in the accompanying drawings that have same reference numerals are represented as similar elements, and unless otherwise particularly stated, the figures in the accompanying drawings are not drawn to scale.
FIG. 1 is a schematic diagram of a heating device of an electromagnetic induction heating type in the related art.
FIG. 2 is a schematic diagram of a vapor generation device according to an embodiment of this application.
FIG. 3 is a schematic structural diagram of an embodiment of a circuit in FIG. 2.
FIG. 4 is a schematic diagram of basic components of a switch tube driver and an LC oscillator oscillation in FIG. 3.
FIG. 5 is a schematic diagram of basic assemblies of an embodiment of a boost module in FIG. 3.
FIG. 6 is a schematic diagram of basic assemblies of an embodiment of a switch module and a standard voltage regulator module in FIG. 3.
FIG. 7 is a structural block diagram of an embodiment of a sampling module in FIG. 3.
FIG. 8 is a schematic diagram of basic assemblies of an embodiment of a first sampling unit in FIG. 7.
FIG. 9 is a schematic diagram of basic assemblies of an embodiment of a second sampling unit in FIG. 8.

### DETAILED DESCRIPTION

For ease of understanding of this application, this application is described below in more detail with reference to the accompanying drawings and specific implementations.

An embodiment of this application provides a vapor generation device whose structure may refer to FIG. 1, including:
a chamber, where an aerosol generation product A is removably received in a chamber;
an inductance coil L, configured to generate a changing magnetic field under an alternating current;
a susceptor 30, where at least a part of the susceptor extends in the chamber, and the susceptor is configured to be inductively coupled to the inductance coil L, and be penetrated by the changing magnetic field to generate heat, to heat the aerosol generation product A such as a cigarette, so that at least a component of the aerosol generation product A is evaporated, to form an aerosol for inhalation;
a temperature sensor 40, configured to sense a temperature of the susceptor 30;
a core 10, being a rechargeable direct current core and configured to output a direct current; and
a circuit 20, connected to the rechargeable core 10 through a proper current, and configured to convert the direct current outputted by the core 10 into an alternating current with a proper frequency and supply the alternating current to the inductance coil L to drive the inductance coil L to generate the changing magnetic field. Meanwhile, the circuit 20 is further configured to sample or receive a temperature result sensed by the temperature sensor 40, and control the current or the power output to the inductance coil L based on the temperature result.

According to settings used in a product, the inductance coil L may include a cylindrical inductor coil wound into a spiral shape, as shown in FIG. 1. The cylindrical inductance coil L wound into the spiral shape may have a radius r ranging from about 5 mm to about 10 mm, and the radius r specifically may be about 7 mm. The cylindrical inductance coil L wound into the spiral shape may have a length ranging from about 8 mm to about 14 mm, and a number of turns of the inductance coil L may range from 8 to 15. Correspondingly, an inner volume may approximately range from 0.15 cm³ to 1.10 cm³.

In a more preferred implementation, the frequency of the alternating current supplied by the circuit 20 to the inductance coil L ranges from 80 KHz to 400 KHz; and more specifically, the frequency may approximately range from 200 KHz to 300 KHz.

In a preferred embodiment, a direct current supply voltage provided by the core 10 ranges from about 2.5 V to about 9.0 V, and an amperage of the direct current that the core 10 can provide ranges from about 2.5 A to about 20 A.

In a preferred embodiment, the susceptor 30 is in a shape of a pin or a blade in general, which is conducive to insertion into the aerosol generation product A. In addition, the susceptor 30 may have a length of about 12 mm, a width of about 4 mm, and a thickness of about 0.5 mm, and may be made of stainless steel of level 430 (SS430). In an alternative embodiment, the susceptor 30 may have a length of about 12 mm, a width of about 5 mm, and a thickness of about 0.5 mm, and may be made of stainless steel of level 430 (SS430). In another variant embodiment, the susceptor 30 may be constructed as a cylindrical or tubular shape; and an internal space of the susceptor during use forms the chamber configured to receive the aerosol generation product A, and the aerosols for inhalation are generated in a manner of heating an outer periphery of the aerosol generation product A. The susceptor may alternatively be made of stainless steel of level 420 (SS420) and an alloy material (such as permalloy) containing iron/nickel.

In an optional implementation, the susceptor 30 is prepared by using the above susceptive material, or is obtained by forming a susceptive material coating on an outer surface of a substrate material with high temperature resistance, such as ceramic, by electroplating, deposition, or in another manner.

In a preferred implementation, the temperature sensor 40 may be a thermistor-type sensor such as a PT1000 in the implementation, or a thermocouple that obtains the temperature by detecting thermoelectric potential, such as a commonly used J-type or K-type thermocouple. As shown in FIG. 2, the temperature sensor 40 is packaged in a pin or a sheet-like susceptor 30, and is extended to the outside of the susceptor 30 through an elongated conductive wire or an electrical pin or the like to connect the circuit 20. In another optional implementation, the temperature sensor 40 is attached to an external surface of the susceptor 30 or welded to the susceptor 30.

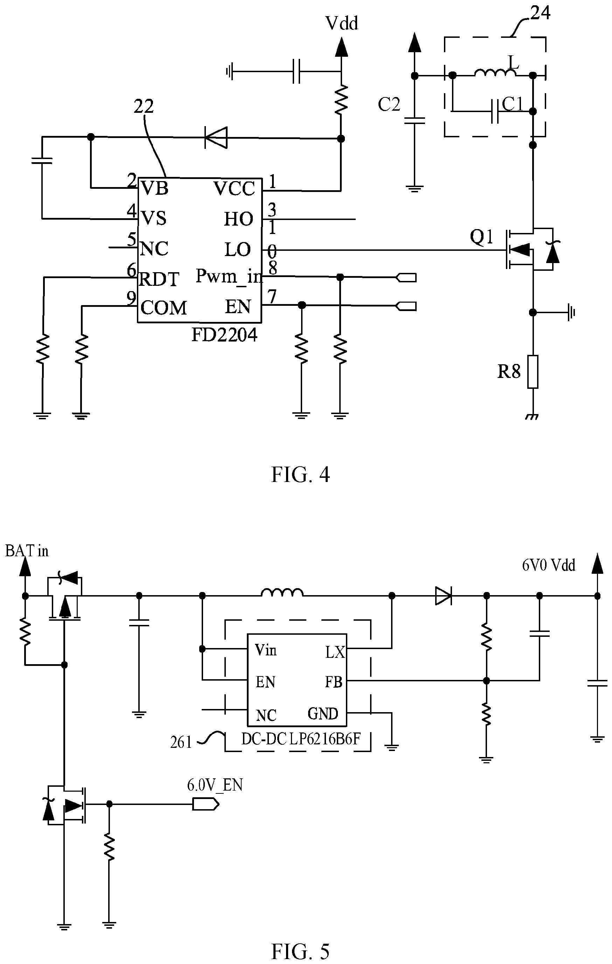

Reference may be made to FIG. 3 and FIG. 4 for a structure and basic components of the circuit 20 in a preferred implementation, which includes:
an LC oscillator 24, formed by a capacitor C1 and the inductance coil L, and provided with a pulse voltage for oscillation by the core 10 to generate a changing current provided to the inductance coil L, thereby generating a changing magnetic field to induce the susceptor 30 to generate heat. In a preferred implementation shown in FIG. 4, the LC oscillator 24 is a parallel LC oscillator 24 composed of the capacitor C1 and the inductance coil L in parallel. In another variant implementation, the LC oscillator may alternatively be a series LC oscillator 24 composed of the capacitor C1 and the inductance coil L in series.

The transistor switch 23 is configured to direct current between the core 10 and the LC oscillator 24 to oscillate the LC oscillator 24 to form a changing current flowing through the inductance coil L. In an implementation shown in FIG. 4, a transistor switch 23 includes a first switch tube Q1, and is alternately turned on and turned off, to guiding a current between the core 10 and the LC oscillator 24 to cause the LC oscillator 24 to oscillate to generate the changing current flowing through the inductance coil L. Certainly, in a preferred implementation shown in FIG. 4, the first switch tube Q1 is a commonly-used MOS tube switch. In connection, the MOS tube switch is turned on/off by receiving a PWM driving signal of a switch tube driver 22 based on a G electrode. In another variant implementation, for example, for example, considering a series LC oscillator 24, a full-bridge/half-bridge composed of more transistor switches 23 may be used to drive the series LC oscillator 24 to oscillate, and the like.

Further, in a preferred implementation, the on and off of the transistor switch 23 is controlled by a driving signal of the switch tube driver 22. For example, a commonly used FD2204 switch driver used in FIG. 4. Certainly, the driving signal of the switch tube driver 22 is transmitted based on a received pulse control signal in a PWM manner transmitted by an MCU controller 21.

Further, in a preferred implementation shown in FIG. 2, the circuit 20 includes a sampling module 25 that samples the sensing result of the temperature sensor 40. The MCU controller 21 controls parameters such as frequency and period of the LC oscillator 24 based on the sensed temperature of the temperature sensor 40 sampled by the sampling module 25, and changes power supplied to the susceptor 30, so that a heating temperature of the susceptor 30 can be kept the same or substantially the same as a required preset target value.

Further, in the implementation, the core 10 needs to continuously provide a large output current during the heating process. In a product, due to a limited capacity of the core 10, a relatively high output current can only be ensured by reducing the output voltage of a positive terminal of the core 10, thereby causing the output voltage of the positive terminal of the core 10 fluctuate violently during the heating process. Referring to FIG. 3, in the circuit 20, in order to eliminate the ripple caused by the violent fluctuation of the voltage output by the core 10 during the temperature sampling process, the operation of the sampling module 25 is stably powered by a boost module 26 after being boosted by the voltage regulator module 28. Certainly, the voltage outputted by the boost module 26 is selectively output to the voltage regulator module 28 by the switch module 27. Specifically, in an embodiment, a device structure of the boost module 26 is shown in FIG. 5, including:
a DC-DC boost chip 261, where the booster chip of a commonly used micro-source semiconductor LP6216B6F is preferably used in FIG. 5 to convert a voltage (about 4.5 V) outputted by the core 10 into a standard output voltage of 6.0 V

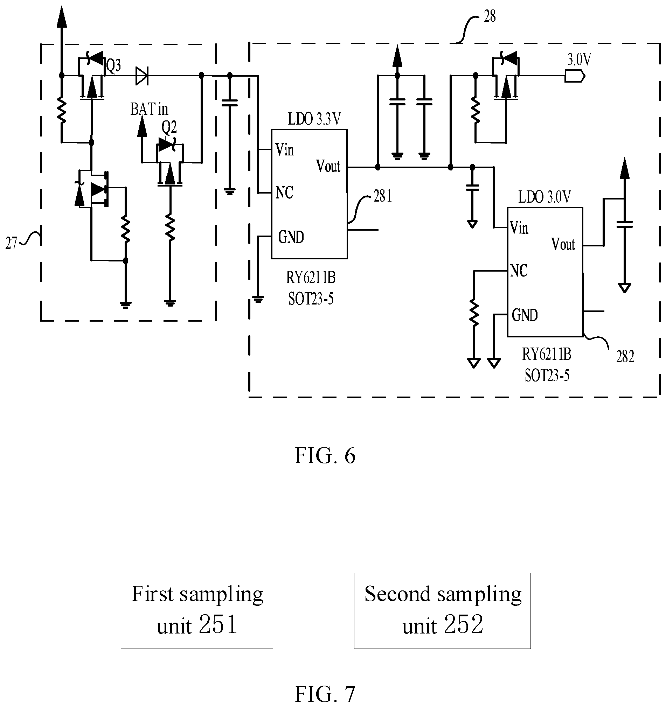

Referring further to FIG. 2 and FIG. 6, the 6.0 V voltage outputted by the DC-DC boost chip 261 is selectively supplied to the voltage regulator module 28 through the switching module 27; and then stably outputted to the sampling module 25 after being adjusted by the voltage regulator module 28.

The switch module 27 mainly includes a second switch tube Q2 and a third switch tube Q3 in FIG. 6. When the second switch tube Q2 is turned on and the third switch tube Q3 is turned off, an output of the core 10 is configured as an input stage of the voltage regulator module 28. When the second switch tube Q2 is turned off and the third switch tube Q3 is turned on, an output of the DC-DC boost chip 261 is configured as an input stage of the voltage regulator module 28.

The voltage regulator module 28 includes two regulators connected in series, namely a first LDO (low dropout linear regulator) regulator 281 and a second LDO regulator 282 of the RY6211B SOT23-5 type in FIG. 6. A regulated output of the first LDO regulator 281 is 3.3 V, and a regulated output of the second LDO regulator 282 is 3.0 V The output voltage of the second LDO regulator 282 is less than the output voltage of the first LDO regulator 281, and the regulated output in a decreasing voltage manner is beneficial for ripple and signal noise. In other variant implementations, in a case of ensuring that the sampling module 25 can be provided with a sufficiently stable operating voltage, the voltage regulator module 28 may alternatively include a plurality of LDO regulators that continue to reduce the series output voltage sequentially.

A problem of inaccurate sampling result caused by the ripple of the core 10 can be greatly reduced accordingly by sampling the voltage regulator module 28 with a two-stage LDO to output the operating voltage providing the sampling module 25. Specifically, assuming that the ripple of the core 10 during the heating process is 0.24 V, a PSRR (power ripple rejection ratio) of the purchased RY6211B SOT23-5 LDO regulator is 70 dB. The ripple of the output voltage is about = 0.24/10^{70/20} = 76 µV after a first-stage LDO (3.3 V), while a minimum ripple required by the commonly used K-type thermocouple (resolution accuracy is 42 µV/0.1 degrees) is 4.2 µV. Therefore, only one-stage LDO is not enough. When a second-stage LDO (3.0 V) is further included, a double PSRR is obtained. In this case, the ripple of the output voltage is about = 0.24/10^{(70+70)/20} = 0.024 µV. As a result, the ripple interference is greatly reduced by the second-stage LDO compared with the first-stage LDO.

Further, in order that the sampling module 25 may also accurately obtain the result sensed by the temperature sensor 40, FIG. 7 shows a schematic structural diagram of a temperature sensor 40 including a K-type thermocouple for sampling according to an embodiment. In this embodiment, the sampling module 25 includes: a first sampling unit 251 for sampling the thermoelectric potential of the hot end of the K-type thermocouple relative to the cold end, and a second sampling unit 252 for sampling potential of the cold end of the K-type thermocouple.

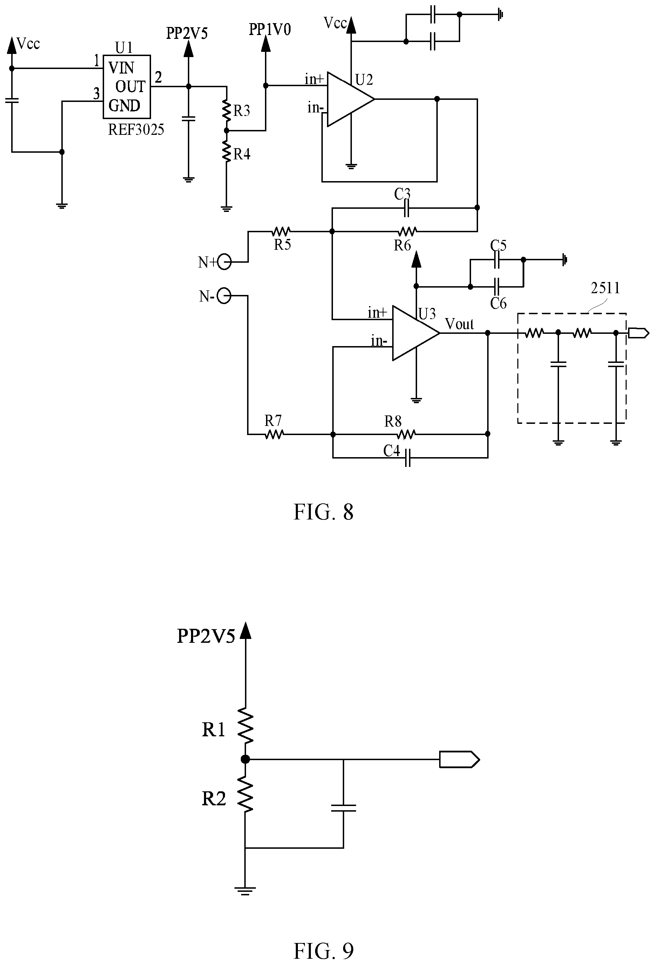

Specifically, component composition of the first sampling unit 251 in an embodiment is shown in FIG. 8, including a reference voltage source U1, a voltage follower U2, a differential operational amplifier U3, and a second-order filter 2511. During implementation, operation principles are as follows.

The reference voltage source U1 (that is, an ADI chip) is configured to output a reference voltage PP2V5 that provides an accurate and stable 2.5 V for a subsequent stage circuit after an input standard voltage Vcc is regulated and a voltage dividing resistor R3/R4 is divided in sequence. During implementation, the reference voltage source U1 uses conventional ADI chips with wide operating currents and output voltages such as REF3025, ADR03ARZ, LM385BLP, and LM385BPW. Generally, operating currents of these ADI chips are between 15 uA and 20 mA, and output voltages are between 50 mV and 5 V

The voltage follower U2 has characteristics of large input impedance and small output impedance, and is configured to isolate the voltage dividing resistor R3/R4 and the differential operational amplifier U3, so that a differential operation amplification ratio is not affected by the voltage dividing resistor R3/R4, and provide an accurate bias voltage for the differential operational amplifier U3. The bias voltage is 1.0 V during implementation.

Sampling terminals in+/in- of the differential operational amplifier U3 are respectively connected to positive/negative electrical pins of the K-type thermocouple 40. For example, in FIG. 8, N+/N- is an access of the positive/negative electrical pins of the K-type thermocouple 40, which is configured to sample the thermoelectric potential of the hot end to the cold end of the K-type thermocouple 40.

In a preferred implementation, the differential operational amplifier U3 is performed by using a zero-drift operational amplifier with higher stability than an ordinary operational amplifier; at the same time, to stabilize the sampling and operation of the differential operational amplifier U3, a capacitor C5 and a capacitor C6 are used as filters for the supply voltage; and an input signal of a positive phase terminal in+ is provided by the capacitor C3, the resistor R5, and the resistor R6, and an input signal of the in- terminal is provided by the capacitor C4, the resistor R7, and the resistor R8.

In an embodiment shown in FIG. 8, a result of the operational output after sampling the potential of N+/N- in the operation of the differential operational amplifier U3 is Vout = PP2V5 R4/ (R3 + R4) + a ΔV, where a is an operational amplifier parameter set by the differential operational amplifier U3, and ΔV is a potential difference between the hot end and the cold end of the sampled thermocouple; and
the result of the above operation is stably outputted to the MCU controller 21 through the second-order filter 2511.

Referring further to FIG. 9, FIG. 9 shows a schematic diagram of a second sampling unit 252 in general. The second sampling unit 252 uses the NTC resistor R1 adj acent to or connected to the cold end of the thermocouple 40 to obtain the cold end potential of the type-K thermocouple and build a partial voltage with the standard resistor R2, and then the supply voltage PP2V5 of the reference voltage source U1 is used as the voltage input to obtain the cold end potential of the thermocouple by detecting the voltage of the NTC resistor R1. Based on the cold end compensation principle of the K-type thermocouple, the MCU controller 21 adds the cold end potential of the K-type thermocouple sampled by the second sampling unit 252 to the thermoelectric potential of the hot end relative to the cold end obtained by the first sampling unit 251, and then looks up the table to obtain a real-time temperature of the susceptor 30.

The first sampling unit 251 provides high stability and high precision calibration for a result reception of the MCU controller 21 with the reference voltage source U1, and the voltage follower U2 and the differential operational amplifier U3 perform precise operations of zero drift and then second-order filter output, so that the signal is not affected by another load of the circuit 20 during the sampling and calculation, and the accuracy is improved.

Further, in a more preferred implementation, grounding between an analog part of the sampling operation and a digital part of the boost drive of the circuit 20 adopts different grounding modes respectively, such as direct grounding, equal potential grounding, and grounding of the housing used in FIG. 4, FIG. 6, and FIG. 8; and electronic field isolation measures such as large resistance or magnetic beads are used to isolate different grounding, and the signal-noise interference therebetween has been shielded, such as an isolation resistor R8 in FIG. 4.

Further, a plurality of basic components, such as resistors, capacitors, diodes, and the like, are further included in each module of the above circuit 20.

It should be noted that, the specification and the accompanying drawings of this application provide preferred embodiments of this application, but is not limited to the embodiments described in this specification. Further, a person of ordinary skill in the art may make improvements or modifications according to the foregoing descriptions, and all the improvements and modifications shall fall within the protection scope of the appended claims of this application.

## Claims

1. A vapor generation device, configured to heat an aerosol generation product to generate an aerosol, and comprising:
a core, configured to supply power;
a susceptor, configured to generate heat upon penetration by a changing magnetic field, to heat the aerosol generation product;
an LC oscillator, comprising an inductance coil and a first capacitor;
a first switch tube, positioned between the core and the LC oscillator, wherein the first switch tube is configured to be intermittently turned on to drive the LC oscillator to oscillate, to direct a changing current to flow through the inductance coil to generate a changing magnetic field in the inductance coil;
a temperature sensor, configured to sense a temperature of the susceptor;
a sampling module, configured to sample a sensing result of the temperature sensor; and
a DC-DC booster, having an input terminal connected to the core and an output terminal connected to the sampling module, wherein the DC-DC booster is configured to boost an output voltage of the core and output the boosted voltage to the sampling module to supply power to the sampling module when the first switch tube is turned on.

2. The vapor generation device according to claim 1, further comprising:
a second switch tube, positioned between the core and the sampling module, wherein the second switch tube is configured to provide the output voltage of the core to the sampling module to supply power to the sampling module when the first switch tube is turned off.

3. The vapor generation device according to claim 2, further comprising:
a voltage regulator module, comprising an input terminal and an output terminal, wherein the input terminal is connected to the DC-DC booster to form a first path, and is connected to the core through the second switch tube to form a second path, and the output terminal is connected to the sampling module; and
the voltage regulator module comprises at least two voltage regulators connected in series configured to generate a constant voltage and supply power to the sampling module with the constant voltage.

4. The vapor generation device according to claim 3, wherein the sampling module comprises at least an operational amplifier.

5. The vapor generation device according to claim 4, further comprising:
a voltage follower, positioned between the voltage regulator module and the operational amplifier, wherein the voltage regulator module provides the constant voltage to the operational amplifier through the voltage follower.

6. The vapor generation device according to claim 4, further comprising:
a second-order filter, configured to perform second-order filtering on an output result of the operational amplifier.

7. The vapor generation device according to claim 3, wherein the regulators in the voltage regulator module have a same power ripple rejection ratio.

8. The vapor generation device according to claim 3, wherein output voltages of the at least two voltage regulators connected in series in the voltage regulator module are reduced in sequence.

9. The vapor generation device according to claim 4, wherein the temperature sensor is a thermocouple, and the operational amplifier is configured to sample a thermoelectric potential of a hot end of the thermocouple relative to a cold end; and
the vapor generation device further comprises:
a cold end sampling unit, configured to sample a potential of the cold end of the thermocouple.

10. A vapor generation device, configured to heat an aerosol generation product to generate an aerosol, and comprising:
a core, configured to supply power;
a susceptor, configured to generate heat upon penetration by a changing magnetic field, to heat the aerosol generation product;
an LC oscillator, comprising an inductance coil and a first capacitor; the LC oscillator is configured to intermittently direct a changing current to flow through the inductance coil to drive the inductance coil to generate a changing magnetic field;
a temperature sensor, configured to sense a temperature of the susceptor;
a sampling module, configured to sample a sensing result of the temperature sensor; and
a voltage regulator module, comprising at least two voltage regulators connected in series, wherein the voltage regulator module is configured to generate a constant voltage based on an output voltage of the core, and supply power to the sampling module with the constant voltage.
